## Europäisches Patentamt

## European Patent Office

## Office européen des brevets

(19)

(11) Veröffentlichungsnummer: **0 046 997**
**B1**

(12) ## EUROPÄISCHE PATENTSCHRIFT

(45) Veröffentlichungstag der Patentschrift:
24.06.87

(21) Anmeldenummer: 81106736.2

(22) Anmeldetag: 28.08.81

(51) Int. Cl.⁴: **H 02 K 29/06,** B 60 K 17/14,
B 60 L 11/12

(54) **Elektrischer Radantrieb für Kraftfahrzeuge, insbesondere für Hybrid-Personenkraftwagen.**

(30) Priorität: 29.08.80 DE 3032603

(43) Veröffentlichungstag der Anmeldung:
10.03.82 Patentblatt 82/10

(45) Bekanntmachung des Hinweises auf die Patenterteilung:
24.06.87 Patentblatt 87/26

(84) Benannte Vertragsstaaten:
AT BE CH DE FR GB IT LI LU NL SE

(56) Entgegenhaltungen:
DE - A - 2 423 665
DE - A - 2 802 753
US - A - 3 845 372
US - A - 4 187 441

FEINWERKTECHNIK & MESSTECHNIK, Band 88, Nr. 4,
Juni 1980, Seiten 167-172, München, DE., J. LINDNER:
"Ein elektronisch kommutierter Scheibenläufermotor
mit Cobalt-Samarium-Magneten"
ELEKTROTECHNIK UND MASCHINENBAU, Band 93, Nr.
8, August 1976, Seiten 335-341, Wien, AT., G.
AICHHOLZER: "Elektrohybridstrassenfahrzeuge -
Entwicklungsstudie"

(73) Patentinhaber: Handel, Peter Herwig, Dr.,
Hans-Stiessberger-Strasse 6, D-8013 Haar (DE)
Patentinhaber: Handel, Peter,
Hans-Stiessberger-Strasse 6, D-8013 Haar (DE)

(72) Erfinder: Handel, Peter Herwig, Dr.,
Hans-Stiessberger-Strasse 6, D-8013 Haar (DE)
Erfinder: Handel, Peter, Hans-Stiessberger-Strasse 6,
D-8013 Haar (DE)

(74) Vertreter: Lehn, Werner, Dipl.-Ing. et al, Hoffmann, Eitle
& Partner Patentanwälte Arabellastrasse 4,
D-8000 München 81 (DE)

## Beschreibung

Die Erfindung bezieht sich auf einen elektrischen Radantrieb für Kraftfahrzeuge mit Brennkraftmotor, insbesondere für Personenkraftwagen, mit den Rädern als Radnabenmotoren zugeordneten und aus einer entsprechend vorgesehenen Batterie gespeisten einzelnen bürstenlosen mehrphasigen, elektronisch in der Drehzahl gesteuerten Elektromotoren.

Durch die Zeitschrift «Elektrotechnik und Maschinenbau», Heft 8, August 1976, Seiten 335 bis 341, ist ein spezielles Elektrostrassenfahrzeug mit elektrischen Radnabenmotoren an eigenen grossen Triebrädern bekannt geworden. Der Antrieb erfolgt ausschliesslich elektrisch, wobei zur Speisung der Radnabenmotoren ein von einem Brennkraftmotor angetriebener Generator und eine Batterie vorgesehen sind.

Durch die GB-A-1 246 354 ist ein Kraftfahrzeug mit über Elektromotoren angetriebenen Rädern bekannt geworden. Der Antrieb erfolgt ausschliesslich elektrisch, wobei die Elektromotoren wahlweise von einem über eine Gasturbine angetriebenen Generator oder eine Batterie gespeist werden.

Durch die DE-A-2 423 665 ist ein homopolarer Axialfeldmotor bekannt geworden, der eine hohe Drehzahl und dementsprechend ein niedriges Drehmoment aufweist. Als Radnabenmotor an den Rädern von Personenkraftwagen mit Brennkraftmotor, wo ein hohes Drehmoment bei geringer Drehzahl zu fordern ist, ist ein solcher Motor nicht geeignet.

Durch die US-A-4 187 441 und durch die Zeitschrift «Feinwerktechnik und Messtechnik» 88 (1980), Seiten 167 bis 172 sind heteropolare Mehrspalt-Axialfeldmotoren bekannt geworden, bei denen der Magnetfluss nach Durchlaufen und Luftspalten und Windungen in axialer Richtung nicht entlang der Motorachse durch einen Magneten zurückgeführt wird, sondern benachbarte Luftspalte und Windungen durchläuft.

Durch die DE-A-2 802 753 ist für Fahrzeugantriebe ein heteropolarer Synchronmotor bekannt geworden, der Sensoren zur Information der Lage und Magnete des Läufers zur Wicklung des Ständers enthält und mehrere Läufer- und Ständerringe zur Leistungserhöhung ohne Vergrösserung des Durchmessers enthalten kann.

Durch die DE-A-2 109 026 schliesslich ist ein Fahrzeugantrieb bekannt geworden, bei dem ein bürstenloser Dreiphasenmotor mit Permanentmagnetläufer über eine elektronische Regeleinrichtung mit einer Sensoreinrichtung für die Drehstellung des Läufers in Antriebs- und Bremsbetrieb gesteuert wird.

Der Erfindung liegt die Aufgabe zugrunde, einen elektrischen Radantrieb der eingangs beschriebenen Art zu schaffen, welcher einfach und robust im Aufbau und Betrieb ist und ohne grösseren konstruktiven Aufwand auch bei vorhandenen Kraftfahrzeugen anstelle der Bremsen als Teil eines unabhängigen weiteren Antriebssystems einbaubar ist, um den Kraftstoffverbrauch des Brennkraftmotors zu verringern bzw. im Kurzstreckenverkehr überhaupt auf Null zu bringen.

Diese Aufgabe wird erfindungsgemäss dadurch gelöst, dass die Radnabenmotoren Teile eines Antriebssystems sind, das unabhängig neben einem konventionellen Brennkraftantrieb besteht, dass die Radnabenmotoren in Form von homopolaren Mehrspalt-Axialfeldmotoren ausgebildet sind, deren Läufer die Radtrommeln und Bremsscheiben und deren Ständer die Bremsklötze und Spritzschutzplatten an wenigstens zwei Rädern eines Räderpaares eines konventionellen Kraftfahrzeuges mit Brennkraftmotor ersetzen, dass der Läufer des Axialfeldmotors einen rohrförmigen Permanentmagneten hoher Energiedichte – z.B. aus Rohrsektoren und/oder Ringscheiben aufgebaut – mit im wesentlichen axialer Magnetisierung und stirnseitig an den Permanentmagneten anschliessenden Schmiedeeisenscheiben mit Polarmen am Umfang aufweist, von denen die radaussenseitige Scheibe die Befestigungsmittel, z.B. Schrauben, für die Radfelge trägt, wobei die Ständerwicklungen in den axialen Luftspalten zwischen den Polarmen am Umfang angeordnet sind, und dass in dem Axialfeldmotor Halleffektschalter oder dergleichen Sensoren zum Steuern des Axialfeldmotors in Antriebs- und Bremsbetrieb über eine elektronische Regeleinrichtung vorgesehen sind.

Ein derartiger Axialfeldmotor weist ein grosses Drehmoment auf, ist robust im Betrieb und ist sehr schnell einzubauen, insbesondere an den nichtangetriebenen Rädern eines Kraftfahrzeuges. Die Axialfeldmotoren anstelle der Bremse und die Regeleinrichtung sind in kürzester Zeit in das Kraftfahrzeug eingebaut und mit der zugehörigen Batterie verbunden. Der Einbau ist jederzeit reversibel. Das Kraftfahrzeug erhält gemäss der Erfindung ein unabhängiges zweites Antriebssystem.

Zweckmässig weist der Läufer des Axialfeldmotors ein auf der Radachse gelagertes, axial magnetisiertes oder nichtmagnetisches Tragrohr auf, auf welches der rohrförmige Permanentmagnet und hierauf Polringe mit nach aussen ragenden Tragarmen und axial magnetisierten Polstücken hoher Energiedichte an den freien Enden der Tragarme zwischen den Schmiedeeisenscheiben aufgesetzt sind.

Der Ständer des Axialfeldmotors besteht vorteilhaft aus einem einseitig zur Radfelge hin offenen topfförmigen Gehäuse und an dem Gehäuse angebrachten, nach innen ragenden Tragelementen, welche in den Luftspalten zwischen den Polstücken angeordnete, flache Ringwicklungen tragen. Dies ergibt einen besonders kompakten und stabilen Aufbau. Auch hier sind grosse Lufträume zwischen den Polstücken und dem topfförmigen Gehäuse ausgebildet.

Zweckmässig bestehen der Permanentmagnet und die Polstücke aus einer Samariumcobaltlegierung, die bisher nur in Verbindung mit heteropolaren Axialfeldmotoren bekannt ist.

Die Ringwicklungen sind vorteilhaft aus geschuppt angeordneten Lamellenwindungen aus Randleitern aufgebaut.

In einer besonders zweckmässigen Ausführungsform weist der Axialfeldmotor fünf Polringe und sechs Luftspalte auf. Die Zahl der Polringe (und Luftspalte) ist bei jedem Fahrzeug von dem an der Achse vorhandenen Raum bestimmt. Vorteilhaft weist er acht Pole und eine dreiphasige Wicklung auf, wobei die Halleffektschalter zum Steuern des Motors um jeweils 15° räumlich zueinander versetzt am Ständer angebracht sind.

Die elektrische Regeleinrichtung ist vorteilhaft zum Steuern des Axialfeldmotors in Antriebs- Widerstandsbrems- und Nutzbremsbetrieb geschaltet.

Weiter enthält die elektronische Regeleinrichtung vorteilhaft einen programmierbaren Festwertspeicher (PROM), welcher Antriebs- und Sicherheitssignale aufnimmt und Steuersignale abgibt.

In einer vorteilhaften Ausführungsform ist die elektronische Regeleinrichtung mit gesteuerten Siliziumgleichrichtern (SCR) aufgebaut.

Zweckmässig ist die elektronische Regeleinrichtung mit einem Dreistellungsschalter für Vorwärtsbetrieb, ausschliesslich Bremsbetrieb und Rückwärtsbetrieb des Axialfeldmotors einschaltbar.

Die Erfindung ist im folgenden an Ausführungsbeispielen anhand der Zeichnungen näher erläutert. In den Zeichnungen zeigen

Fig. 1 eine schematische Axialschnittansicht eines auf einer Fahrzeugachse aufgesetzten Axialfeldmotors gemäss der Erfindung,

Fig. 2 eine Stirnansicht des Läufers des Axialfeldmotors nach Fig. 1 in kleinerem Massstab, mit angedeuteten Halleffektschaltern,

Fig. 3 eine schematische Querschnittansicht durch einen Tragarmstern mit Polstücken des Axialfeldmotors nach Fig. 1,

Fig. 4 eine Lamellenwindung der Ringwicklungen des Axialfeldmotors nach Fig. 1,

Fig. 5 eine Darstellung des Schaltverlaufs der Halleffektschalter in Fig. 2,

Fig. 6 ein Schaltbild einer Schaltung mit gesteuerten Siliziumgleichrichtern zum Steuern des Axialfeldmotors nach Fig. 1,

Fig. 7 eine schematische Darstellung eines Stromverlaufs in den drei Phasen des Axialfeldmotors nach Fig. 1, und

Fig. 8 eine Schaltung zur Steuerung der Schaltung nach Fig. 6.

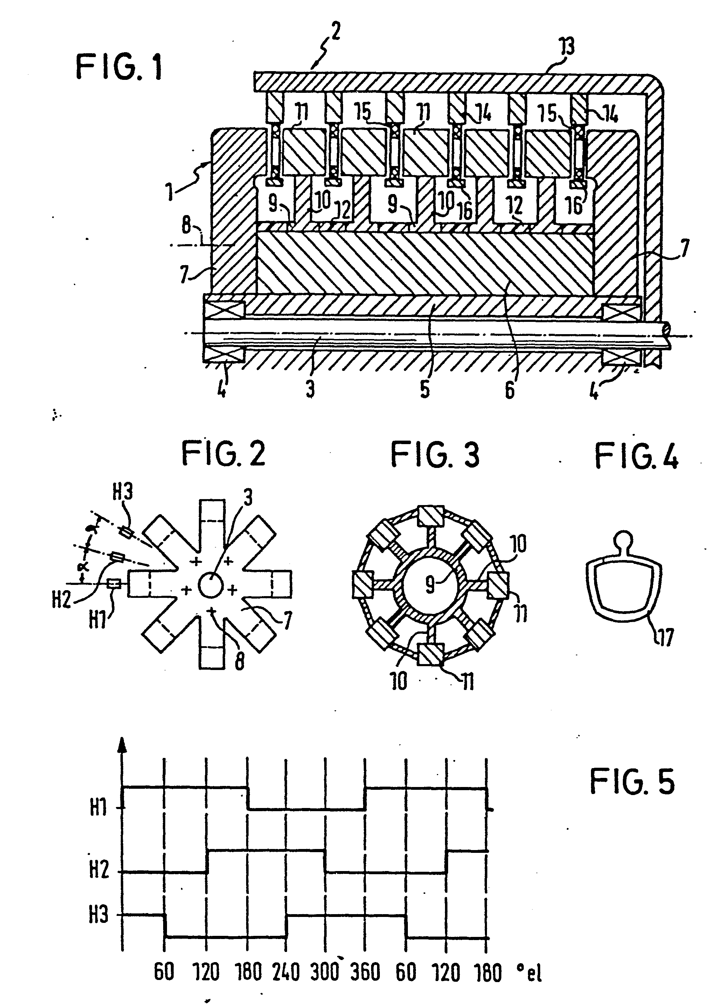

Der in den Fig. 1 bis 3 dargestellte bürstenlose Axialfeldmotor ist achtpolig und dreiphasig und weist sechs etwa 8 mm weite Luftspalte auf. Er besteht aus einem Läufer 1 und einem Ständer 2. Läufer 1 und Ständer 2 ersetzen ohne Änderung der Radachse 3 die Radtrommel samt Scheibenbremse und zugehöriger Spritzschutzplatte des Rades.

Der Läufer 1 umfasst ein über Lager 4 auf der Radachse 3 gelagertes, axial magnetisiertes oder nichtmagnetisches Tragrohr 5. Bei Antriebsrädern ist der Läufer 1 mit der (drehbaren) Radachse solidarisch und die zusätzlichen Lager 4 entfallen. Auf dem Tragrohr 5 ist ein rohrförmiger Permanentmagnet 6 hoher Energiedichte mit im wesentlichen axialer Magnetisierung aufgesetzt. Der Permanentmagnet 6 kann aus Ringscheiben und/oder Ringsektoren aufgebaut sein. Zweckmässig besteht er aus einer Samariumcobaltlegierung einer Energiedichte von $2 \times 10^5$ J/m$^3$. An den Permanentmagneten 6 schliessen stirnseitig Schmiedeeisenscheiben 7, die beispielsweise 1,9 cm dick sind, an. Die radaussenseitige Schmiedeeisenscheibe 7 trägt die Befestigungsmittel für die Radfelge, wie es bei 8 angedeutet ist. Der im wesentlichen axial magnetisierte Permanentmagnet 6 kann im Bereich der Schmiedeeisenscheibe 7 eine radial nach aussen gerichtete Magnetisierungskomponente aufweisen.

Auf den Permanentmagneten 6 sind fünf als Tragarmsterne ausgebildete Polringe 9 mit an den freien Enden der Tragarme 10 angesetzten, axial magnetisierten Polstücken 11 hoher Energiedichte aufgesetzt. Die Polstücke 11 können aus einer Eisenaluminiumnickelcobaltlegierung ($5 \times 10^4$ J/m$^3$), aber auch aus einer Samariumcobaltlegierung wie der Permanentmagnet 6 sein. Zwischen den Polringen 9 kann auf dem Permanentmagneten 6 Kunststoff oder Giessharz 12 als zusätzliches Befestigungsmittel vorgesehen sein. Die Tragarme 10 selbst sind aus nichtmagnetischem Material und zur Erzielung einer Lüfterwirkung etwas schräggestellt.

Der Ständer 2 des Axialmotors besteht aus einem auf die Radachse 3 aufgesetzten, topfförmigen Gehäuse 13 aus vorzugsweise nichtmagnetischem Material. In dem Gehäuse 13 sind sechs nach innen ragende, ringförmige Tragelemente 14 angebracht, welche jeweils eine in die Luftspalte zwischen den Polstücken 11 ragende flache Ringwicklung 15 tragen. Auf der Innenseite der Ringwicklungen sind Stützringe 16 vorgesehen. Die Tragelemente 14 und die Stützringe 16 sind zweckmässig mit der jeweils zugehörigen Ringwicklung 15 vergossen.

Die Ringwicklung 15 besteht zweckmässig aus geschuppt angeordneten Lamellenwindungen 17 unter Verwendung eines Bandleiters, von denen eine in Fig. 4 dargestellt ist. Jede der sechs Ringwicklungen 15 enthält je drei um 15° räumlich gegeneinander versetzte Phasen, die für alle sechs Ringwicklungen in Serie geschaltet sind, so dass nur drei Starkstromzuleitungen den Axialfeldmotor verlassen. Die Wicklung ist vorzugsweise in Stern geschaltet.

Der Axialfeldmotor ist homopolar, da die Kraftlinien durch Polstücke 11 überall in dieselbe Richtung verlaufen. Die Dichte des Magnetflusses im Luftspalt beträgt etwa 0,8 Tesla.

Bei einer Stromstärke von 250 A entwickelt der Axialfeldmotor ein Drehmoment von etwa 33 Nm. Hierbei entsteht bei einer Drehzahl von 600 U/min, die einer angelegten Spannung von 100 V entspricht, eine Leistung von etwa 20 kW. Bei einem etwa 1000 kg schweren Fahrzeug (einschliesslich Batteriegewicht) mit etwa 60 cm Raddurchmesser beträgt die entwickelte Geschwindigkeit dann etwa 100 km/h. Wenn an jedem Rad eines Räderpaares je ein Axialfeldmotor vorgesehen ist, beträgt die Gesamtleistung etwa 40 kW. Die höchste, mit diesem begrenzten Drehmoment mit dem Fahrzeug ohne Einsatz des Brennkraftmotors zugängliche Steigung ist 15% und die Beschleunigungszeit aus dem Stand auf 50 km/h beträgt etwa 8 sec.

Für den Betrieb des Axialfeldmotors sind eine Regeleinrichtung sowie eine Batterie erforderlich. Die Regeleinrichtung ist aus Festkörperbauelementen hergestellt und hat zwei Hauptfunktionen:

a) Umschalten des Motorstromes in den drei Phasen in der richtigen Reihenfolge, so dass jeder der in radialer Richtung verlaufenden Leiter in der dreiphasigen Wicklung positiv zum Drehmoment beiträgt. Diese Umschaltung wird von drei am Ständer 2 in räumlichen Intervallen von $\alpha = 15°$ angeordneten Halleffektschaltern H1, H2, H3 (Fig. 2) zum Abtasten der Läuferstellung ausgelöst. Das Schaltverhalten der Halleffektschalter H1, H2, und H3 ist in Fig. 5 dargestellt.

b) Regelung des vom Motor aufgenommenen Stromes und des im Motor entstehenden Drehmoments. Das Drehmoment ist proportional dem Strom.

Die Batterie enthält beispielsweise 18 Blei- oder Eisennickel-6V-Batterien oder ebenso viele 12V-Batterien, wobei die letztere Wahl besonders bei Netzspannungen von 220 V günstig ist. Beim Fahren bzw. beim Nutzbremsen können die Batterien automatisch, je nach Frequenz der von den Halleffektschaltern H1–H3 an einen Festwertspeicher PROM gegebenen Impuse, d.h. abhängig von der Motordrehzahl und je nach dem, ob das Gaspedal oder das Bremspedal betätigt ist, in sechs parallele Gruppen von je drei Batterien in Reihe (18/36 V), drei parallele Gruppen von je sechs Batterien in Reihe (36/72 V), in zwei parallele Gruppen von je neun Batterien in Reihe (54/108 V) oder alle Batterien in Reihe (108/216 V) geschaltet werden. Die beispielsweise im Kofferraum des Fahrzeugs untergebrachten Batterien sind zur Zeit etwa 300 kg schwer und geben dem Fahrzeug eine Reichweite von insgesamt etwa 80 km ohne Benützung des Brennkraftmotors. Bei weiteren Fahrten wird der Brennkraftmotor benutzt. Bei ausgebauter Batterie ist nur eine Widerstandsbremsung möglich (bei mehrtägigen Kontinentalfahrten empfohlen).

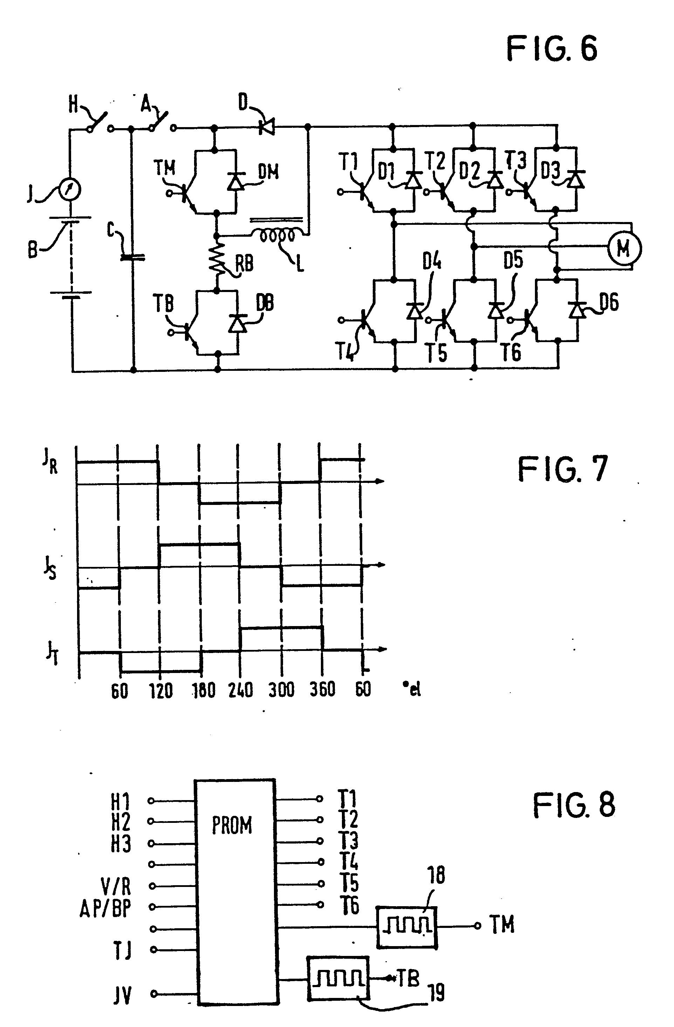

Fig. 6 zeigt das Schaltbild einer Schaltung in der Regeleinrichtung, welche Fahrbetrieb, Widerstandsbremsbetrieb und Nutzbremsbetrieb des Axialfeldmotors ermöglicht. Die Schaltung ist über einen Strommesser I und einen Hauptschalter H über die Batterie zur Speisung des Axialfeldmotors angeschlossen. Parallel zu den Eingangsklemmen liegt ein die Oberwellen verringernder Kondensator C. Es folgt ein weiterer Schalter A. Parallel zu dem Kondensator C liegen die Reihenschaltung einer Transistor-Dioden-Chopper-Kombination TM, DM, eines Bremswiderstandes RB und einer Transistor-Dioden-Chopper-Kombination TB, DB. Die Transistor-Dioden-Chopper-Kombination TM, DM dient der Strombegrenzung bzw. Steuerung beim Fahren und die Transistor-Dioden-Chopper-Kombination TB, DB der Strombegrenzung bzw. Steuerung beim Widerstandsbremsen. Parallel zur Transistor-Dioden-Chopper-Kombination TM, DM liegen eine Drossel L und eine Sicherheitsdiode D, welche mögliche Hochspannungen beim Einschwingen verhindert.

Der Schaltung in Fig. 6 folgt eine Brückenschaltung aus sechs Transistor-Dioden-Kombinationen T1, D1, T2, D2, T3, D3, T4, D4, T5, D5 und T6, D6, welche auf den Motor M geschaltet sind. Diese sechs Transistor-Dioden-Kombinationen werden von den drei Halleffektschaltern H1, H2 und H3 gesteuert und erzeugen den Dreiphasenstrom. Beim Nutzbremsen arbeiten die sechs Dioden D1, D2, D3, D4, D5 und D6 als Gleichrichterbrücke und laden die Batterie B auf. Die Transistoren TM, TB und T1 bis T6 sind vorzugsweise gesteuerte Siliziumgleichrichter (SCR). Bei n Motoren wird dieser Brückenteil der Regeleinrichtung n mal parallel dupliziert.

Eine mögliche Steuerung der Ströme $I_R$ $I_S$ und $I_T$ durch die Schaltung nach Fig. 6 ist in Fig. 7 dargestellt.

Die Steuerung der Regeleinrichtung durch die Halleffektschalter H1, H2 und H3, durch das Gas- und Bremspedal sowie durch den jeweiligen Stromwert erfolgt vorteilhaft über einen programmierbaren Festwertspeicher PROM. Die Schaltung eines derartigen programmierbaren Festwertspeichers PROM ist in Fig. 8 dargestellt. Der Festwertspeicher PROM erhält Signale von den Halleffektschaltern H1, H2, H3, ein Signal V/R entsprechend einer Vorwahl Vorwärts- oder Rückwärtsbetrieb, ein Signal AP/BP von einem Gaspotentiometer oder einem Bremspotentiometer, ein Signal TI entsprechend einer thermischen Überlastung des Motors M und des Transistors TM sowie ein Stromgrössensignal IV. An den Ausgängen des Festwertspeichers PROM treten die Steuersignale für die Transistoren T1 bis T6 auf. Zwei weitere Signale aus dem Festwertspeicher PROM steuern zwei Schwingkreise 18 und 19, die die Breite und Frequenz der Öffnungs-Rechteckimpulse für die Transistor-Dioden-Chopper-Kombination TM bzw. TB, bestimmen. Ausserdem gibt der Festwertspeicher PROM auch mehrere Batterieumschaltsignale ab. Bei in der Praxis am häufigsten vorkommenden zwei Motoren mit unabhängigen Phasen sind der obere Teil des Festwertspeichers PROM und die Verbindungen zu H1–H3, T1–T6 und TI dupliziert.

Der Fahrer steuert das Fahrzeug bei elektrischem Betrieb mit Hilfe des Gaspedals, des Bremspedals und des Dreistellungsschalters für Vorwärtsbetrieb, ausschliesslich Bremsbetrieb und Rückwärtsbetrieb. Von dem Dreistellungsschalter kommt das Signal V/R, je nach Stellung Vorwärtsbetrieb oder Rückwärtsbetrieb. In allen drei Stellungen des Dreistellungsschalters ist immer Bremsbetrieb möglich, Widerstandsbremsen sogar falls der Hauptschalter H offen ist. Die gesamte Regeleinrichtung wird durch Schliessen des Hauptschalters H in Betrieb gesetzt. Zweckmässig erfolgt dies in der Stellung «Garage» des Zündschlosses.

Gas- und Bremspedal sind zusätzlich zu ihrer normalen Funktion mechanisch mit je einem Potentiometer mit Pedal-Anfangskontakt beim Bremspedal und Pedalmittelkontakt beim Bremspedal verbunden. Drückt man bei geschlossenem Hauptschalter H auf das Gaspedal, so schliesst sich nach kurzem Pedalweg der Schalter A (Fig. 6) und der Kontaktarm des Gaspotentiometers, wobei das Gaspotentiometer den höchsten Widerstand hat und dementsprechend der Festwertspeicher PROM den Transistor TM nur für etwa 5% der Zeit öffnet (Kriechgeschwindigkeit, am Schwingungskreis neben dem Festwertspeicher PROM einstellbar). Bei weiterem Durchdrücken des Gaspedals nimmt die Breite und Polfrequenz der «Ein»-Signale beispielsweise bis etwa 300 Hz zu und der Transistor TM wird etwa 90% der Zeit offen sein. Bei 90% Öffnungszeit wird der Transistor TM durch einen Direktschalter (in Fig. 6 nicht dargestellt) kurzgeschlossen. Die Regelung kann auch dadurch erfolgen, dass das Gaspotentiometer (oder variable Induktivität) Teil eines an den Festwertspeicher PROM angeschlossenen Schwingkreises der Regeleinrichtung ist, und dessen Frequenz sowie hierdurch indirekt die Frequenz und Breite der «Ein»-Signale für den Transistor SM bestimmt. Die «Ein»-Signale sind zusätzlich durch thermische Überlastungssignale TI in Breite und Frequenz begrenzt, welche aus der Ständerwicklung des Axialfeldmotors und von der Halterung des Transistors TM her auf den Schwingungskreis einwirken.

Wird das Gaspedal losgelassen, so bewegt sich das Fahrzeug infolge seiner Trägheit frei. Wird das Bremspedal leicht angedrückt, so schliesst sich nach kurzem Pedalweg jeweils ein Kontakt, der die Batterie B auf die der jeweiligen Läuferdrehzahl entsprechende Serien-Parallel-Schaltung schaltet. Gleichzeitig schliesst sich der Schalter A. Damit wird die Batterie B über die sechs Dioden D1 bis D6 im Nutzbremsbetrieb aufgeladen. Bei sehr kleinen Geschwindigkeiten, bei denen kein Rückschalten der Batterie B mehr möglich ist, schwindet die Nutzbremswirkung allmählich. Wird das Bremspedal noch weiter durchgedrückt, so beginnt zusätzlich ab einer bestimmten Stellung S sowohl die hydraulische Bremse mechanisch auf die nichtelektrisch betriebenen Räder zu wirken als auch gleichzeitig die elektrische Widerstandsbremsung. Letztere erfolgt ähnlich wie bei der elektrischen Wirkung des Gaspedals, indem sich in der Stellung S der Kontakt am Bremspotentiometer schliesst. In dieser Anfangsstellung, kurz vor Pedalwegmitte, hat das Bremspotentiometer den höchsten Widerstand und dementsprechend öffnet der Festwertspeicher PROM den Transistor TB zunächst nur etwa für 5% der Zeit. Das Widerstandsbremsen erfolgt durch Wärmeentwicklung insbesondere im Bremswiderstand RB, aber auch im Motor M, im Transistor TB und in den zugehörigen Leitungen, parallel, d.h. zusätzlich zu dem während derselben Zeit ggf. noch weiterhin stattfindenden Nutzbremsen und parallel zu den hydraulischen Bremsen. Die bei stärkerer Bremsung anfallende Energie verteilt sich also im wesentlichen auf die Batterie, die Bremsklötze und den der Transistor-Dioden-Chopper-Kombination TB, DB in Reihe geschalteten Bremswiderstand RB.

Die Regelung der Widerstandsbremsung erfolgt dadurch, dass das Bremspotentiometer Teil z.B. eines an den Festwertspeicher PROM geschalteten Schwingungskreises ist und dessen Frequenz sowie indirekt die vom Schwingungskreis ausgehenden «Ein»-Signale bestimmt. Diese «Ein»-Signale werden jedoch beim Widerstandsbremsen nicht zusätzlich von den vom Motor M und von der Halterung des Transistors TB ausgehenden thermischen Überlastungssignalen begrenzt, sondern diese thermischen Überlastungssignale aktivieren beim Widerstandsbremsen nur eine rote Bremsüberlastungswarnanlage im Blickfeld des Fahrers am Armaturenbrett. Der Strommesser I mit roten Höchststromempfehlungsmarken auf beiden Seiten zeigt dem Fahrer durch Rechtsausschlag den Entladestrom und durch Linksausschlag den Ladestrom beim Nutzbremsen.

Die Batterie-Serien-Parallel-Schaltung wird von dem Festwertspeicher PROM aufgrund der von den drei Halleffektschaltern H1, H2 und H3 abgeleiteten Läuferdrehfrequenz-Information gesteuert, und zwar unter Berücksichtigung eines etwaigen Signals AP/BP.

**Patentansprüche**

1. Elektrischer Radantrieb für Kraftfahrzeuge mit Brennkraftmotor, insbesondere für Personenkraftwagen, mit den Rädern als Radnabenmotoren zugeordneten und aus einer entsprechend vorgesehenen Batterie gespeisten einzelnen bürstenlosen mehrphasigen, elektronisch in der Drehzahl gesteuerten Elektromotoren, dadurch gekennzeichnet, dass die Radnebenmotoren Teile eines Antriebssystems sind, das unabhängig neben einem konventionellen Brennkraftantrieb besteht, dass die Radnabenmotoren in Form von homopolaren Mehrspalt-Axialfeldmotoren ausgebildet sind, deren Läufer (1) die Radtrommeln und Bremsscheiben und deren Ständer (2) die Bremsklötze und Spritzschutzplatten an wenigstens zwei Rädern eines Räderpaares eines konventionellen Kraftfahrzeuges mit Brennkraftmotor ersetzen, dass der Läufer (1) des Axialfeldmotors einen rohrförmigen Permanentmagneten (6) hoher Energiedichte – z.B. aus Rohrsektoren und/oder Ringscheiben aufgebaut – mit im wesentlichen axialer Magnetisierung und stirnseitig an den Permanentmagneten (6) anschliessende Schmiedeeisenscheiben (7) mit Polarmen am Umfang aufweist, von denen die radaussenseitige Scheibe die Befestigungsmittel (8) für die Radfelge trägt, wobei die Ständerwicklungen (15) in den axialen Luftspalten zwischen den Polarmen am Umfang angeordnet sind, und dass in dem Axialfeldmotor Halleffektschalter (H1, H2, H3) oder dergleichen Sensoren zum Steuern des Axialfeldmotors in Antriebs- und Bremsbetrieb über eine elektronische Regeleinrichtung vorgesehen sind.

2. Elektrischer Radantrieb nach Anspruch 1, dadurch gekennzeichnet, dass der Läufer (1) des Axialfeldmotors ein auf der Radachse (3) gelagertes, axial magnetisiertes oder nichtmagnetisches Tragrohr (5) aufweist, auf welches der rohrförmige Permanentmagnet (6) und hierauf Polringe (9) mit nach aussen ragenden Tragarmen (10) und axial magnetisierten Polstücken (11) hoher Energiedichte an den freien Enden der Tragarme (10), zwischen den Schmiedeeisenscheiben (7) aufgesetzt sind.

3. Elektrischer Radantrieb nach Anspruch 2, dadurch gekennzeichnet, dass der Ständer (2) des Axialfeldmotors aus einem einseitig zur Radfelge hin offenen topfförmigen Gehäuse (13) und an dem Gehäuse (13) angebrachten, nach innen ragenden Tragelementen (14) besteht, welche in den Luftspalten zwischen den Polstücken (11) angeordnete flache Ringwicklungen (15) tragen.

4. Elektrischer Radantrieb nach einem der Ansprüche 1 bis 3, dadurch gekennzeichnet, dass der Permanentmagnet (6) und die Polstücke (11) aus einer Samariumcobaltlegierung bestehen.

5. Elektrischer Radantrieb nach Anspruch 3 oder 4, dadurch gekennzeichnet, dass die Ringwicklungen (15) aus geschuppt angeordneten Lamellenwindungen (17) aus Bandleitern bestehen.

6. Elektrischer Radantrieb nach einem der Ansprüche 2 bis 5, dadurch gekennzeichnet, dass der Axialfeldmotor fünf Polringe (9) und sechs Luftspalte aufweist.

7. Elektrischer Radantrieb nach einem der Ansprüche 1 bis 6, dadurch gekennzeichnet, dass der Axialfeldmotor acht Pole und eine dreiphasige Wicklung aufweist, wobei die Halleffektschalter (H1, H2, H3) um jeweils 15° räumlich zueinander versetzt am Ständer angebracht sind.

8. Elektrischer Radantrieb nach einem der Ansprüche 1 bis 7, dadurch gekennzeichnet, dass die elektronische Regeleinrichtung zum Steuern des Axialfeldmotors in Antriebs-, Widerstandsbrems- und Nutzbremsbetrieb schaltbar ist.

9. Elektrischer Radantrieb nach einem der Ansprüche 1 bis 8, dadurch gekennzeichnet, dass die elektronische Regeleinrichtung einen Antriebs- und Sicherheitssignale aufnehmenden und Steuersignale abgebenden programmierbaren Festwertspeicher (PROM) enthält.

**Claims**

1. Electric wheel drive for vehicles with internal combustion engine, particularly for passenger cars, with individual brushles, polyphasic, electronically speed controlled electric motors associated with the wheels as wheel hub motors being fed from a battery accordingly provided, characterized in that the wheel hub motors are parts of a drive system existing independently besides a conventional internal combustion drive, that the wheel hub motors are formed as homopolar multiple-airgap axial-field motors whose rotors (1) replace the wheel drums and brake disks and whose stators (2) replace the brake pads and brake splash shields of at least two wheels of a pair of wheels of a conventional motor vehicle with internal combustion engine, that the rotor (1) of the axial-field motor has a tubular permanent magnet (6) of high energy density – e.g. constructed with tube sectors and/or ring disks – with essentially axial magnetization and forged iron disks (7) frontally adjoining the permanent magnet (6) including pole arms on the periphery, of which disks the one facing the external side of the wheel carries the fastening means for the wheel rim, the stator windings (15) being arranged in the axial airgaps between the pole arms on the periphery, and that in the axial-field motor Halleffect switches (H1, H2, H3) or the like sensors controlling the axial-field motor in the propulsion and braking operation modes via an electronic control system are provided.

2. Electric wheel drive according to claim 1, characterized in that the rotor (1) of the axial-field motor comprises an axially magnetized or nonmagnetic support tube (5) located on the axle (3), on which the tubular permanent magnet (6) and thereon pole rings (9) with support arms (10) extending outwardly and with axially magnetized pole-pieces (11) of high energy density at the free ends of the support arms (10) are placed between the forged iron disks (7).

3. Electric wheel drive according to claim 2, characterized in that the stator (2) of the axial-field motor comprises a potshaped casing (13) being open on one side towards the wheel rim and support elements (14) fixed on the casing (13) and extending inward, which carry flat ring-shaped coils (15) located in the airgaps between the pole-pieces (11).

4. Electric wheel drive according to any one of claims 1 to 3, characterized in that the permanent magnet (6) and the pole-pieces (11) consist of a samarium-cobalt alloy.

5. Electric wheel drive according to claim 3 or 4, characterized in that the ring-shaped coils (15) consist of lammellar windings (17) made of ribbon conductors in flake-shaped arrangement.

6. Electric wheel drive according to any one of claims 2 to 5, characterized in that the axial-field motor has five pole-rings (9) and six airgaps.

7. Electric wheel drive according to any one of claims 1 to 6, characterized in that the axial-field motor has eight poles and a three-phase winding, the Hall-effect switches (H1, H2, H3) being positioned on the stator spatially staggered by 15° each.

8. Electric wheel drive according to any one of claims 1 to 7, characterized in that the electronic control system is wired for control of the axial-field motor in the propulsion, resistive braking and regenerative braking operation modes.

9. Electric wheel drive according to claims 1 to 8, characterised in that the electronic control system contains a programmable read only memory (PROM) receiving drive and safety signals and transmitting control signal.

**Revendications**

1. Entraînement électrique pour une roue d'un véhicule avec moteur à combustion interne, en particulier pour une voiture de voyageurs, comprenant des particuliers moteurs de moyeu de roues électriques polyphasiques sans brosses, avec fréquence de rotation contrôlée d'une manière électronique, adjointes aux roues et alimentés par une batterie prévue, caractérisé en ce que les moteurs de moyeu font parties d'un système de propulsion indépendante à côté d'un entraînement à combustion interne conventionel, que les moteurs de moyeu sont des multiples entrefers moteurs homopolaires à champ axial et multiple entrefer dont les rotors (1) remplacent les tambours et les disques de freins et dont les stators (2) remplacent les cales et les protections d'éclaboussure chez deux roues d'une paire des roues d'un véhicule conventionel avec moteur à combustion interne au moins, que le rotor (1) du moteur à champ axial comprend un aimant permanent à symétrie cylindrique (6) de grande densité d'énergie par exemple construit avec des secteurs cylindriques et/ou disques annulaires avec aimantation essentiellement axiale et un disque frontal de fer forgé (7) qui présente des bras polaires sur la circonférence et qui porte des moyens de fixation (8) de la jante de la roue sur la partie extérieure, tandis que les bobines (15) du stator sont placées dans les espaces entrefers axials entre les bras polaires sur la circonférence, et que le moteur à champ axial contient des commutateurs à effet Hall (H1, H2, H3) ou des autres senseurs pour la commande du moteur par un système électronique en régime de propulsion ou de freinage.

2. Entraînement électrique pour une roue selon la revendication 1, caractérisé en ce que le rotor (1) du moteur à champ axial présente un tube – tube (5) avec aimantation axiale ou non – aimanté positionné sur le pont (3) de la roue, sur qui se trouve l'aimant permanent (6) qui porte des anneaux (9) avec des bras porte-pôle (10) et avec des pièces polaires (11) à aimantation axiale et grande densité d'énergie placées sur les extrémités libres des bras porte-pôle (10), entre les disques de fer forgé (7).

3. Entraînement électrique pour une roue selon la revendication 2, caractérisé en ce que le stator (2) du moteur à champ axial se compose d'un carter (13) en forme de pot ouvert unilatéralement vers la jante de roue, et des éléments portants (14) fixés sur le carter (13) qui s'éxtendent vers l'intérieur et qui portent des bobines (15) annulaires plates, localisées dans l'entrefer entre les pièces polaires (11).

4. Entraînement électrique pour une roue selon l'une quelconque des revendications 1 à 3, caractérisé en ce que l'aimant permanent (6) et les pièces polaires (11) se composent d'un alliage samarium-cobalt.

5. Entraînement électrique pour une roue selon la revendication 3 ou 4, caractérisé en ce que les bobines annulaires (15) se composent des spires lammellaires (17) de bande conductrice.

6. Entraînement électrique pour une roue selon l'une quelconque des revendications 2 à 5, caractérisé en ce que le moteur à champ axial présente cinq anneaux de pôles (9) et six espaces entrefer.

7. Entraînement électrique pour une roue selon l'une quelconque des revendications 1 à 6, caractérisé en ce que le moteur à champ axial présente huit pôles et un bobinage triphasique, et dont les commutateurs à effet Hall (H1, H2, H3) sont placés avec un décalage de 15° sur le stator.

8. Entraînement électrique pour une roue selon l'une quelconque des revendications 1 à 7, caractérisé en ce que le système de réglage électronique peut être utilisé pour le contrôle du moteur à champ axial dans les régimes de propulsion, freinage résistant, et freinage utile.

9. Entraînement électrique pour une roue selon l'une quelconque des revendications 1 à 8, caractérisé en ce que le système de réglage électronique comprend une mémoire programmable (PROM) qui accepte des signaux de contrôle de la propulsion ou de sécurité et qui produit des signaux de commande du moteur.

FIG. 1

FIG. 2  FIG. 3  FIG. 4

FIG. 5

# FIG. 6

# FIG. 7

# FIG. 8

11